# EUROPÄISCHE PATENTSCHRIFT

(11) **EP 0 994 796 B1**
(45) Veröffentlichungstag und Bekanntmachung des Hinweises auf die Patenterteilung: **19.03.2003**
(21) Anmeldenummer: 98936241.3
(22) Anmeldetag: 20.06.1998
(51) Int. Cl.: B60S 1/08

(54) **VORRICHTUNG UND VERFAHREN ZUM BETREIBEN EINES REGENSENSORS**
PROCESS AND DEVICE FOR OPERATING A RAIN SENSOR
DISPOSITIF ET PROCEDE PERMETTANT DE FAIRE FONCTIONNER UN DETECTEUR DE PLUIE

(30) Priorität: 08.07.1997 DE 19729103
(43) Veröffentlichungstag der Anmeldung: 26.04.2000
(73) Patentinhaber: ROBERT BOSCH GMBH, 70442 Stuttgart (DE)
(72) Erfinder: HOG, Norbert, D-77815 Bühl (DE)
(86) Internationale Anmeldenummer: DE9801701
(87) Internationale Veröffentlichungsnummer: WO99002379

(56) Entgegenhaltungen:
- DE-A- 4 112 847
- DE-A- 4 411 773
- DE-U- 29 508 838
- US-A- 4 916 374

## Beschreibung

### Stand der Technik

Die Erfindung geht aus von einer Vorrichtung und ein Verfahren zum Betreiben eines Regensensors nach dem Oberbegriff des Hauptanspruchs.

Aus der DE-A- 41 12 847 ist bereits eine Vorrichtung zum Betreiben eines Regensensors bekannt, mit einem Sender, der durch eine vorgeschaltete Steueranordnung angesteuert wird, einem Empfänger, der ein Sensorsignal an eine Signalaufbereitung abgibt, und eine Auswertung, die in Abhängigkeit von dem Sensorsignal ein Schaltsignal zum Einschalten eines Scheibenwischers abgibt.

Weiterhin ist eine Regelung vorgesehen, die das einer sauberen Scheibe entsprechende Sensorsignal auf einem vorgegebenen Ruhepegel regelt. Der Regler gibt dafür ein Stellsignal an die Steueranordnung des Senders zur langsamen Regelung der Sendeleistung auf einen vorgegebenen Ruhepegel. Alternativ gibt der Regler ein Stellsignal an die Signalaufbereitung zur langsamen Regelung des Verstärkungsfaktors des zu verstärkenden Sensorsignals. Mit der Regelung sind Herstellungstoleranzen einzelner Bauteile des Regensensors sowie Toleranzen bei der Montage des Regensensors in einem weiten Bereich ausgleichbar.

Nachteilig ist, daß der Regler das einer sauberen und trokkenen Scheibe entsprechende Sensorsignal vorzugsweise anfangs auf den Ruhepegel regelt und daß sich im weiteren Verlauf des Sensorbetriebs das Stellsignal des Reglers im Vergleich zum Sensorsignal nur äußerst langsam ändern darf, damit Veränderungen des Sensorsignales nicht ausgeregelt werden. D. h., daß die Regelung im wesentlichen eine (einmalige) Kalibrierung des Regensensors vornimmt.

Das führt weiterhin dazu, daß die Auswertung des Sensorsignals im wesentlichen in dem eingestellten Arbeitsbereich erfolgt. Dies hat den Nachteil, daß bei kleinen Sensorsignalen eine Änderung des Sensorsignals schlechter aufgelöst wird als eine gleich große relative Änderung bei großen Sensorsignalen.

### Vorteile der Erfindung

Die erfindungsgemäße Vorrichtung mit den kennzeichnenden Merkmalen des Hauptanspruchs hat den Vorteil, daß ein Regler einen Regensensor in Abhängigkeit vom Grad der Benetzung einer Scheibe regelt und daß das Sensorsignal und zusätzlich das Stellsignal des Reglers einer Auswerteanordnung zur Auswertung zugeführt werden. Auf diese Weise kann das Stellsignal und der Arbeitsbereich in Abhängigkeit von dem Sensorsignal unmittelbar und schnell nachgeführt werden, ohne daß eine Ausregelung des Sensorsignales stattfindet. Der Arbeitsbereich des Sensorsignales kann daher kleiner gewählt werden, so daß bei einer geeigneten Verstärkung die Auflösung größer wird.

Durch die in den Unteransprüchen aufgeführten Maßnahmen ergeben sich vorteilhafte Weiterbildungen und Verbesserungen der im Hauptanspruch angegebenen Merkmale. Ein besonderer Vorteil ist die räumliche Trennung der Auswerteanordnung von dem Regelkreis für den Regensensor, die dadurch ermöglicht wird, daß die Regelung von einer Regelelektronik durchgeführt wird, so daß ein Mikrocontroller lediglich zur Auswertung verwendet wird.

Daher ist als weiterer Vorteil die Auswerteanordnung bzw. der Mikrocontroller Teil einer Zentralelektronik eines Kraftfahrzeugs.

Vorteilhaft ist weiterhin, daß der Mikrocontroller lediglich eine geringe Leistungsfähigkeit und eine geringe Taktfrequenz benötigt, da er als "Zuhörer" nur Signale auswertet.

Ein weiterer Vorteil besteht darin, daß der Regler den Arbeitsbereich des Senders kontinuierlich oder in Stufen regelt und dabei raumsparend als ASIC (Anwendungsspezifischer IC) ausgebildet ist.

Besonders vorteilhaft ist die getrennte Übertragung von Sensorsignal und Stellsignal an den Mikrocontroller. Dadurch erhält man einen hohen Dynamikumfang des Mikrocontrollereingangs und eine hohe Auflösung.

Ein weiterer Vorteil ist die Verwendung eines differentiellen Verstärkers zur Auswertung des Sensorsignals. Damit wird ein differentieller Arbeitsbereich eingestellt, so daß kleine Signaländerungen mit hoher Auflösung in der Auswerteanordnung ausgewertet werden können.

### Zeichnung

Ausführungsbeispiele der Erfindung sind in der Zeichnung dargestellt und in der nachfolgenden Beschreibung näher erläutert. Es zeigt Figur 1 ein schematisches Schaltbild eines Regelkreises eines Regensensors, Figur 2 eine Schaltung zur Auswertung von Stellsignalen und Sensorsignalen und Figur 3 ein alternatives Ausführungsbeispiel eines Schaltbildes eines Regelkreises.

### Beschreibung des Ausführungsbeispieles

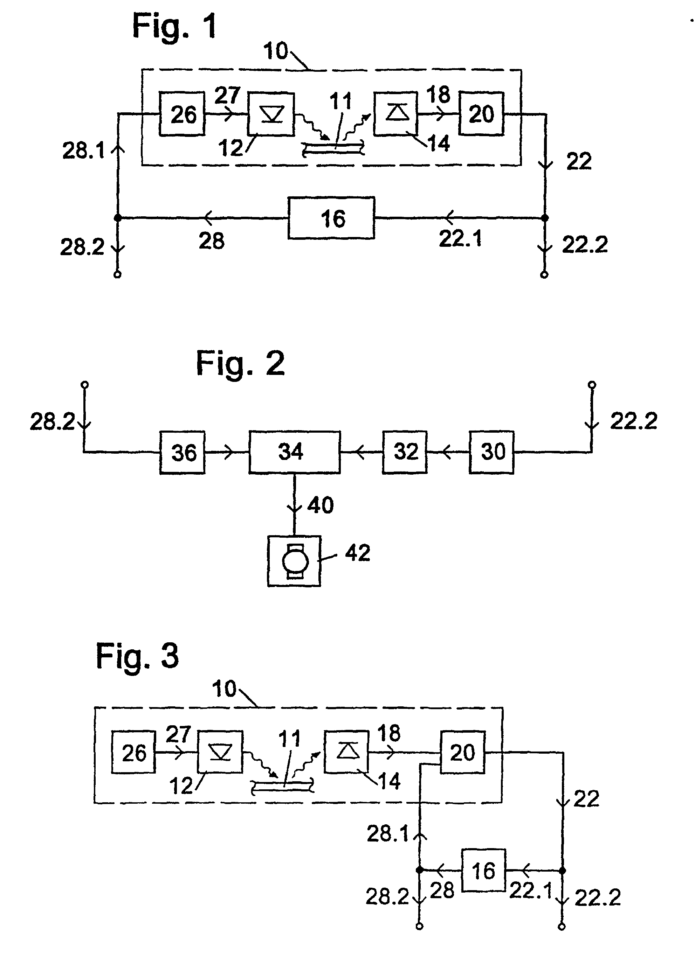

Figur 1 zeigt einen Regensensor 10, der mindestens einen Sender 12 und einen Empfänger 14 aufweist und in einem Regelkreis mit einem Regler 16 betrieben wird. Der Regensensor erfaßt die Benetzung z.B. einer Kraftfahrzeugscheibe 11 durch Feuchtigkeit und ist in dem Wischbereich eines Scheibenwischers (nicht dargestellt) angeordnet.

Der Regensensor 10 funktioniert nach einem optoelektronischen Prinzip. Es eignet sich jedoch ebenfalls ein anderes Sensorprinzip. Bekannt sind beispielsweise akustische, kapazitive und resistive Regensensoren. Der akustische Regensensor setzt Schallwellen in ein entsprechendes elektrisches Ausgangssignal um, der resistive Regensensor verändert seinen Leitwert und der kapazitive Regensensor verändert seinen Kapazitätswert bei Auftreten von Feuchtigkeit oder Schmutz auf der Scheibe.

Der hierbei verwendete optoelektronische Regensensor 10 enthält einen lichtabstrahlenden Sender 12, dessen Licht in die Scheibe 11 eingekoppelt, durch die Scheibe 11 geleitet und an einer bestimmten Stelle der Scheibe 11 auf einen lichtdetektierenden Empfänger 14 ausgekoppelt wird. Der Empfänger 14 setzt die detektierte Lichtmenge in ein Sensorsignal 18 um, das einer Signalaufbereitung 20 zugeführt wird. Die Signalaufbereitung 20 ist als Operationsverstärker realisiert. Möglich ist jedoch ebenfalls die Verwendung anderer Strom-Spannungs-Wandler. Die Signalaufbereitung 20 befindet sich in dem Regensensor 10, kann jedoch ebenfalls außerhalb des Regensensors 10 angeordnet sein.

Das aufbereitete Sensorsignal 22 (22.1) wird einerseits dem analogen Regler 16 des Regelkreises zugeführt, der in Abhängigkeit von dem Sensorsignal 22 den Senderstrom 27 des Senders 12 regelt. Dazu gibt der Regler 16 ein Stellsignal 28 (28.1) aus, mit dem ein Kondensator geladen wird, dessen Kondensatorspannung als Steuerspannung für eine spannungsgesteuerte Stromquelle 26 wirkt. In dem Regler 16 ist ein Vergleicher integriert, der den Pegel des Sensorsignals 22 mit Grenzwerten eines vorgegebenen Arbeitsbereichs vergleicht. In Abhängigkeit von dem Vergleichsergebnis wird das Stellsignal 28 vergrößert, verkleinert oder konstant gehalten. Der Regler 16 des Regelkreises ist ferner platzsparend als ASIC in einem Gehäuse des Regensensors 10, das an der Scheibe 11 des Kraftfahrzeugs angebracht ist, angeordnet.

Das Sensorsignal 22 (22.2) wird andererseits zur Auswertung einer Schaltung gemäß Figur 2 zugeführt, die u.a. einen differentiellen Verstärker 30, einen Analog-Digital-Wandler 32 und eine Auswerteanordnung 34 beinhaltet.

Erfindungsgemäß wird das Stellsignal 28 (28.2) des Reglers 16 ebenfalls über einen zweiten AD-Wandler 36 der Auswerteanordnung 34 zugeführt.

Wird zur Auswertung der Signale 22, 28 ein Mikrocontroller verwendet, so sind die AD-Wandler 32, 36 üblicherweise im Mikrocontroller integriert. Bei analoger Auswertung kann auf die AD-Wandler 32, 26 verzichtet werden.

Über ein Ausgangssignal 40 der Auswerteanordnung 34 wird eine nachgeschaltete Vorrichtung, wie z.B. ein Wischermotor 42 einer Kraftfahrzeugscheibenwischanlage, in Abhängigkeit von der Benetzung der Scheibe automatisch angesteuert.

Die Auswerteschaltung nach Figur 2 ist Teil einer Zentralelektronik des Kraftfahrzeugs, kann jedoch auch am Wischermotor 42 oder in dem Regensensorgehäuse angeordnet sein.

Die Funktionsweise der erfindungsgemäßen Vorrichtung gemäß Figur 1 und 2 wird nun im folgenden näher erläutert.

Als erstes soll nun der Regelkreis erläutert werden. Der Empfänger 14 gibt ein Sensorsignal 18 an die Signalaufbereitung 20 ab, das dort derart verstärkt wird, daß das Maximum des Sensorsignals 22 bei z.B. fünf Volt liegt. Die Verstärkung erfolgt linear. Im Regler 16 ist der Bereich zwischen vier und fünf Volt als Arbeitsbereich für das Sensorsignal 22 vorgegeben. Das dem Regler 16 zugeführte Signal 22 wird durch den Vergleicher mit den beiden Grenzwerten des Arbeitsbereiches verglichen.

Befindet sich das Sensorsignal 22 zwischen den beiden Grenzwerten, so bleibt das Stellsignal 28, über das die Senderleistung angesteuert wird, unverändert. Wie bereits eingangs beschrieben, wird durch das Stellsignal 28 die Eingangsspannung der spannungsgesteuerten Stromquelle 26 festgelegt. Somit wird in Abhängigkeit des Stellsignals 28 der durch die Stromquelle 26 erzeugte Strom 27 vorgegeben und damit auch die Senderleistung des Senders 12.

Fällt das Sensorsignal 22 unterhalb des unteren Grenzwertes, so gibt der Regler 16 solange ein steigendes Stellsignal 28, und damit auch einen anwachsenden Strom 27, aus, bis das durch den Empfänger 14 abgegebene Sensorsignal 18, 22 wieder in den Arbeitsbereich des Vergleichers fällt.

Im umgekehrten Fall, wenn das Sensorsignal 22 den oberen Grenzwert überschreitet, verringert der Regler 16 das Stellsignal 28 und damit auch den Strom 27 und die Sendeleistung. Das Stellsignal 28 wird solange verringert, bis sich das Sensorsignal 22 wieder im Arbeitsbereich befindet.

Unabhängig von der Funktionsweise des Regelkreises gemäß Figur 1 werden Sensorsignale 22 (22.2) und Stellsignale 28 (28.2) ebenfalls der Auswerteanordnung 34 zugeführt. Das linear verstärkte Sensorsignal 22 wird dem differentiellen Verstärker 30 zugeführt, der den Arbeitsbereich streckt. Das maximale Sensorsignal 22 wird auf den maximalen Eingang des Mikrocontrollers gelegt. Bei einem 8-Bit-Mikrocontroller und einem Sensorsignalmaximum von circa fünf Volt entspricht ein Bit ca. 20 Millivolt. Dadurch, daß aufgrund des vorgegebenen Arbeitsbereichs des Reglers 16 lediglich hohe Pegel des Sensorsignals 22 ausgewertet werden, erhält man eine sehr gute Auflösung.

Die Auswertung der Sensorsignale 22 und Stellsignale 28 in der Auswerteanordnung 34 bzw. dem Mikrocontroller erfolgt nun folgendermaßen:

Solange das Stellsignal 28 konstant bleibt, wertet die Auswerteanordnung 34 ausschließlich das Sensorsignal 22 im Hinblick auf die Benetzung einer Scheibe durch Regen, Feuchtigkeit, Eis oder Schmutz aus und steuert mittels Ausgangssignalen 40 eine Scheibenwischanlage mit Wischermotor 42, an. Dafür sind in der Auswerteanordnung 34 Schwellen abgelegt. Bei Erreichen einer ersten Schwelle durch das Sensorsignal 22 wird üblicherweise ein Wischbetrieb (Intervalloder Dauerbetrieb) ausgelöst.

Bewegt sich das Sensorsignal 22 aus dem Arbeitsbereich heraus, so erfordert dies eine Korrektur der Senderleistung des Senders 12 durch Erhöhen oder Verringern des Stellsignals 28 durch den Regler 16. Die Auswerteanordnung 34 erkennt die Änderung des Stellsignals 28 und wertet dann lediglich das Stellsignal 28 im Hinblick auf die Ansteuerung des Wischermotors 42 aus. Die Sensorsignale 22 werden dabei nicht berücksichtigt. Erreicht das Stellsignal 28 eine weitere, in der Auswerteanordnung 34 abgelegte Schwelle so wird ein Wischbetrieb ausgelöst.

Sobald das Sensorsignal 22 sich wieder im Arbeitsbereich befindet, bleibt das Stellsignal 28 konstant. Dies wird durch die Auswerteanordnung 34 erkannt und sodann wird nur noch das Sensorsignal 22 anstelle des Stellsignales 28 zur Auswertung berücksichtigt.

Figur 3 zeigt ein alternatives Ausführungsbeispiel des Regelkreises. in dem der Regler 16 auf die Signalaufbereitung 20 des Sensorsignales 18 wirkt. Durch die Variation des Verstärkungsfaktors für das Sensorsignal 18 in der Signalaufbereitung 20 wird das verstärkte Sensorsignal 22 in den Arbeitsbereich geregelt. Die Sendeleistung des Senders 12 ist dabei durch die Stromquelle 26 konstant und nahe einem Maximalwert eingestellt. Die Auswertung des Sensorsignals 22 (22.2) und des Stellsignals 28 (28.2) erfolgt analog zu der oben beschriebenen Auswertung.

In Abwandlung der Ausführungsbeispiele nach Figur 1 bis 3 wird ein digitaler Regler 16 verwendet, der in Abhängigkeit von digitalen Sensorsignalen 22 Stellsignale 28 an die spannungsgesteuerte Stromquelle 26 abgibt. Hierbei erfolgt die Regelung über eine Widerstandsschaltung im Regler 16, so daß diskrete Stellsignale 28 eine Regelung der Senderleistung des Senders 12 in Stufen erlaubt. Die AD-Wandler 32, 36 in der Auswerteschaltung gemäß Figur 2 entfallen.

## Patentansprüche

1. Vorrichtung zum Betreiben eines Regensensors (10), der zur automatischen Ansteuerung einer Einrichtung, insbesondere eines Scheibenwischers für Kraftfahrzeuge, verwendet wird, mit einem Sender (12), einem Empfänger (14), dessen Sensorsignal (18) einer Signalaufbereitung (20) und einer dieser nachgeschalteten Auswerteanordnung (34) zugeführt wird, und einem Regler (16), der in Abhängigkeit von dem Sensorsignal (18, 22) ein Stellsignal (28) an den Regensensor (10) zur Regelung des Sensorsignales (18, 22) abgibt, **dadurch gekennzeichnet, daß** neben dem Sensorsignal (18, 22) auch das Stellsignal (28) der Auswerteanordnung (34) zur Auslösung von Schaltvorgängen der Einrichtung zugeführt ist.

2. Vorrichtung nach Anspruch 1, **dadurch gekennzeichnet, daß** die Auswerteanordnung (34) räumlich entfernt von dem Regensensor (10) und/oder dem Regler (16), angeordnet ist und vorzugsweise einen Teil einer Zentralelektronik eines Kraftfahrzeugs bildet.

3. Vorrichtung nach Anspruch 1, **dadurch gekennzeichnet, daß** der Regler (16) die Sendeleistung des Senders (12), insbesondere bei Erreichen von Grenzwerten für den Arbeitsbereich des Regensensors, kontinuierlich oder in Stufen regelt.

4. Vorrichtung nach Anspruch 1, **dadurch gekennzeichnet, daß** der Regler (16) als ASIC (Anwendungsspezifischer IC) aufgebaut ist.

5. Vorrichtung nach Anspruch 1, **dadurch gekennzeichnet, daß** sie einen differentiellen Verstärker (30) zur Verstärkung des Sensorsignals (22) aufweist.

6. Vorrichtung nach Anspruch 1, **dadurch gekennzeichnet, daß** die der Auswerteanordnung (34) zugeführten Stellsignale (28) oder Sensorsignale (18, 22) analog oder digital sind.

7. Vorrichtung nach Anspruch 1, **dadurch gekennzeichnet, daß** sie zur Ansteuerung eines Wischermotors (42) einer Scheibenwischanlage zu verwenden ist.

8. Verfahren zum Betreiben eines Regensensors (10), der zur automatischen Ansteuerung einer Einrichtung, insbesondere eines Scheibenwischers für Kraftfahrzeuge, verwendet wird, mit einem Sender (12), einem Empfänger (14), dessen Sensorsignal (18) einer Signalaufbereitung (20) und einer dieser nachgeschalteten Auswerteanordnung (34) zugeführt wird, und einem Regler (16), der in Abhängigkeit von dem Sensorsignal (18, 22) ein Stellsignal (28) an den Regensensor (10) zur Regelung des sensorsignales (18, 22) abgibt, **dadurch gekennzeichnet, daß** neben dem Sensorsignal (18, 22) auch das Stellsignal (28) der Auswerteanordnung (34) zur Auslösung von Schaltvorgängen der Einrichtung zugeführt wird.

9. Verfahren nach Anspruch 8, **dadurch gekennzeichnet, daß** die Auswerteanordnung (34) das Stellsignal (28) und/oder das Sensorsignal (18, 22) auswertet.

10. Verfahren nach Anspruch 8, **dadurch gekennzeichnet, daß** die Auswerteanordnung (34) das Sensorsignal (18, 22) bei konstantem Stellsignal (28) auswertet und bei sich änderndem Stellsignal (28) das Stellsignal (28) unabhängig von dem Sensorsignal (18, 22) zur Auslösung von Schaltvorgängen der Einrichtung auswertet.

## Claims

1. Device for operating a rain sensor (10) which is used for automatically actuating a device, in particular a wiper for motor vehicles, having a transmitter (12), a receiver (14) whose sensor signal (18) is fed to a signal conditioner (20) and to an evaluation arrangement (34) connected downstream of it, and a regulator (16) which, as a function of the sensor signal (18, 22), outputs an actuation signal (28) to the rain sensor (10) to regulate the sensor signal (18, 22), **characterized in that**, in addition to the sensor signal (18, 22), the actuation signal (28) is also fed to the evaluation arrangement (34) in order to trigger switching operations of the device.

2. Device according to Claim 1, **characterized in that** the evaluation arrangement (34) is arranged spatially removed from the rain sensor (10) and/or the regulator (16), and preferably forms part of a central electronic system of a motor vehicle.

3. Device according to Claim 1, **characterized in that** the regulator (16) regulates the transmission power of the transmitter (12) continuously or incrementally, in particular when limiting values for the working range of the rain sensor are reached.

4. Device according to Claim 1, **characterized in that** the regulator (16) is constructed as an ASIC (Application-Specific IC).

5. Device according to Claim 1, **characterized in that** it has a differential amplifier (30) for amplifying the sensor signal (22).

6. Device according to Claim 1, **characterized in that** the actuation signals (28) or sensor signals (18, 22) which are fed to the evaluation arrangement (34) are analogue or digital.

7. Device according to Claim 1, **characterized in that** it can be used to actuate a wiper motor (42) of a wiper system.

8. Method for operating a rain sensor (10) which is used for automatically actuating a device, in particular a wiper for motor vehicles, having a transmitter (12), a receiver (14) whose sensor signal (18) is fed to a signal conditioner (20) and to an evaluation arrangement (34) connected downstream of it, and a regulator (16) which, as a function of the sensor signal (18, 22), outputs an actuation signal (28) to the rain sensor (10) to regulate the sensor signal (18, 22), **characterized in that**, in addition to the sensor signal (18, 22), the actuation signal (28) is also fed to the evaluation arrangement (34) in order to trigger switching operations of the device.

9. Method according to Claim 8, **characterized in that** the evaluation arrangement (34) evaluates the actuation signal (28) and/or the sensor signal (18, 22).

10. Method according to Claim 8, **characterized in that**, when there is a constant actuation signal (28), the evaluation arrangement (34) evaluates the sensor signal (18, 22), and when there is a change in actuation signal (28) the evaluation arrangement (34) evaluates the actuation signal (28) independently of the sensor signal (18, 22) in order to trigger switching operations of the device.

## Revendications

1. Dispositif pour faire fonctionner un détecteur de pluie (10) utilisé pour commander automatiquement un appareil, en particulier un essuie-glace de véhicule automobile, qui comprend un émetteur (12), un récepteur (14) dont le signal de détecteur (18) est envoyé à un traitement de signal (20) et à un système d'exploitation (34) monté en aval de celui-ci, ainsi qu'un régulateur (16) qui, en fonction du signal de détecteur (18, 22) délivre au détecteur de pluie (10) un signal de réglage (28) pour régler le signal de détecteur (18, 22),
**caractérisé en ce qu'**
en plus du signal de détecteur (18, 22), le signal de réglage (28) est envoyé au système d'exploitation (34) pour déclencher les opérations de connexion de l'appareil.

2. Dispositif selon la revendication 1,
**caractérisé en ce que**
le système d'exploitation (34) est éloigné du détecteur de pluie (10) et/ou du régulateur (16), et constitue de préférence une partie d'une électronique centrale d'un véhicule.

3. Dispositif selon la revendication 1,
**caractérisé en ce que**
le régulateur (16) règle en continu ou par degrés la puissance de l'émetteur (12), notamment quand sont atteintes des valeurs limites pour la zone de travail du détecteur de pluie.

4. Dispositif selon la revendication 1,
**caractérisé en ce que**
le régulateur (16) est un ASIC (circuit intégré propre à une application).

5. Dispositif selon la revendication 1,
**caractérisé en ce qu'**
il comporte un amplificateur différentiel (30) pour amplifier le signal (22) du détecteur.

6. Dispositif selon la revendication 1,
**caractérisé en ce que**
les signaux de réglage (28) ou de détecteur (18, 22) adressés au système d'exploitation sont analogiques ou numériques.

7. Dispositif selon la revendication 1,
**caractérisé en ce qu'**
il est prévu pour commander un moteur (42) d'une installation d'essuie-glace.

8. Procédé pour faire fonctionner un détecteur de pluie utilisé pour commander automatiquement un appareil, en particulier un essuie-glace de véhicule automobile, qui comprend un émetteur (12), un récepteur (14) dont le signal de détecteur (18) est envoyé à un traitement de signal (20) et à un système d'exploitation (34) monté en aval de celui-ci, ainsi qu'un régulateur (18) qui, en fonction du signal de détecteur (18, 22) délivre au détecteur de pluie (10) un signal de réglage (28) pour régler le signal de détecteur (18, 22),
**caractérisé en ce qu'**
en plus du signal de détecteur (18, 22), le signal de réglage (28) est envoyé au système d'exploitation (34) pour déclencher les opérations de connexion de l'appareil.

9. Procédé selon la revendication 8,
**caractérisé en ce que**
le système d'exploitation (34) exploite le signal de réglage (28) et/ou le signal de détecteur (18, 22).

10. Procédé selon la revendication 8,
**caractérisé en ce que**
le système d'exploitation (34) exploite le signal du détecteur (18, 22) quand le signal de réglage (28) est constant, tandis que si ce signal (28) varie, c'est ce signal de réglage (28) qu'il exploite indépendamment du signal de détecteur (18, 22), pour déclencher des opérations de connexion de l'appareil.
